# FASCICULE DE BREVET EUROPEEN

(11) **EP 3 750 216 B1**
(45) Date de publication et mention de la délivrance du brevet: **08.12.2021**
(21) Numéro de dépôt: 19708140.9
(22) Date de dépôt: 04.02.2019
(51) Int. Cl.: H01S 3/13, H01S 3/213, H01S 3/23, H01S 3/02, H01S 3/04, H01S 3/042, H01S 3/06, H01S 3/091, H01S 3/22, H01S 3/034, H01S 3/036

(54) **ÉLÉMENT D'UN SYSTÈME OPTIQUE, POUR RECEVOIR UN FLUIDE FONCTIONNEL SOUS PRESSION**
ELEMENT EINES OPTISCHEN SYSTEMS ZUR AUFNAHME EINER UNTER DRUCK STEHENDEN FUNKTIONSFLÜSSIGKEIT
OPTICAL SYSTEM ELEMENT FOR RECEIVING A PRESSURISED FUNCTIONAL FLUID

(30) Priorité: 05.02.2018 FR 1850946
(43) Date de publication de la demande: 16.12.2020
(73) Titulaire: Commissariat à l'énergie atomique et aux énergies alternatives, 75015 Paris (FR)
(72) Inventeur: LACAMPAGNE, Lionel, 33470 GUJAN-MESTRAS (FR); CHAPPUIS, Christian, 33510 ANDERNOS-LES-BAINS (FR); NEAUPORT, Jérôme, 33800 BORDEAUX (FR); VERMERSCH, Sébastien, 33260 LA TESTE-DE-BUCH (FR)
(74) Mandataire: Brevalex
(86) Numéro de dépôt international: PCT/FR2019/050237
(87) Numéro de publication internationale: WO 2019/150057

(56) Documents cités:
- JP-A- H01 181 486
- US-A- 3 361 989
- US-A- 3 731 225
- US-A- 4 672 617
- US-A1- 2002 034 207
- US-A1- 2016 248 214
- US-B2- 6 937 629

## Description

### DOMAINE TECHNIQUE

L'invention se rapporte à un élément d'un système optique, l'élément comportant une enceinte destinée à recevoir en circulation un fluide fonctionnel, et adaptée à laisser entrer et/ou sortir un faisceau lumineux.

L'invention se rapporte plus particulièrement, mais de manière non limitative, au domaine des amplificateurs optiques.

### ÉTAT DE LA TECHNIQUE ANTÉRIEURE

On connaît par exemple, dans l'art antérieur, un élément comportant une enceinte adaptée à recevoir en circulation un fluide réfrigérant, pour refroidir efficacement un milieu amplificateur solide disposé dans l'enceinte. L'enceinte est munie d'au moins une fenêtre d'entrée et/ou sortie, pour laisser passer un faisceau laser généré, en fonctionnement, par le milieu amplificateur solide.

Le document US 6,937,629 décrit un système optique comportant un exemple d'un tel élément. Une enceinte reçoit une série de plaques minces, disposées les unes à la suite des autres le long d'un axe longitudinal, et formant chacune un milieu amplificateur solide.

L'enceinte comporte également une ouverture d'entrée, et une ouverture de sortie, permettant la circulation d'un fluide réfrigérant à travers l'enceinte. En fonctionnement, le fluide réfrigérant circule dans un circuit de refroidissement en passant par l'enceinte, avec un débit permettant un refroidissement efficace des plaques minces.

Le système optique comporte en outre des diodes de pompage, situées à l'extérieur de l'enceinte, et destinées au pompage optique des plaques minces. L'enceinte est disposée entre deux miroirs réfléchissants, qui définissent ensemble une cavité optique résonante à la longueur d'onde d'un signal laser émis par les plaques minces, en fonctionnement.

Afin que le signal laser puisse effectuer des allers-et-retours dans la cavité optique résonante, l'enceinte présente deux fenêtres d'entrée et/ou sortie, formées sur deux faces opposées de la cavité. Chacune de ces fenêtres est constituée d'un hublot, transparent à la longueur d'onde du signal laser.

En fonctionnement, le fluide réfrigérant traversant l'enceinte exerce une force de pression sur ces hublots, entraînant une légère déformation mécanique de ces derniers, et donc une déformation de front d'onde sur le signal laser circulant dans la cavité optique.

Dans l'article « Liquid-cooled ceramic Nd:YAG split-disk amplifier for high-average-power laser », HajimeOkada & al., Volume 266, Issue 1, Optics Communications, 1 Octobre 2006, Pages 274-279, les auteurs proposent un amplificateur optique muni d'un miroir à conjugaison de phase, pour compenser des défauts de front d'onde liés à l'immersion du milieu amplificateur dans un fluide réfrigérant en circulation. L'utilisation d'un miroir à conjugaison de phase reste cependant une solution complexe et onéreuse à mettre en œuvre.

On connaît également dans l'art antérieur les documents suivants :
- US 2016/248214 A1, qui décrit une unité laser avec un écran pour afficher une énergie et/ou une puissance électrique consommée par l'unité laser ;
- JP H01 181486, qui décrit un appareil laser à colorant, avec une synchronisation en fréquence de balayage via un contrôle de la pression dans des conduites étanches;
- US 2002/034207 A1, qui décrit un laser à molécule à base de fluor ;
- US 4 672 617, qui décrit un laser multi-spectral, avec plusieurs tubes laser agencés concentriques ;
- US 3 361 989, qui décrit un système laser avec un système de refroidissement amélioré ; et
- US 3 731 225, qui décrit un laser à fibre optique.

Un objectif de la présente invention est de proposer un élément d'un système optique, l'élément comportant une enceinte adaptée à recevoir en circulation un fluide fonctionnel, et permettant de limiter une déformation de front d'onde sur un faisceau lumineux entrant et/ou sortant de ladite enceinte.

Un objectif de la présente invention est également que la solution proposée soit simple et peu onéreuse.

### EXPOSÉ DE L'INVENTION

Cet objectif est atteint avec un élément d'un système optique comportant :
- une première enceinte, destinée à recevoir en circulation un premier fluide, nommé fluide fonctionnel ; et
- au moins une fenêtre d'entrée et/ou sortie, située sur la première enceinte, et apte à laisser passer un faisceau lumineux dans et/ou hors de la première enceinte.

Selon l'invention, la fenêtre d'entrée et/ou sortie comporte deux hublots qui délimitent latéralement une cavité dite intercalaire, adjacente à la première enceinte.

La cavité intercalaire est destinée à recevoir un second fluide, d'indice optique prédéterminé, et est munie d'un dispositif d'ajustement de la pression en son sein.

En fonctionnement, la première enceinte reçoit le fluide fonctionnel en circulation. La fenêtre d'entre et/ou sortie sépare alors le fluide fonctionnel et un milieu environnant, présentant chacun des indices optiques respectifs différents l'un de l'autre. Le fluide fonctionnel, en circulation dans la première enceinte, exerce sur la fenêtre d'entrée et/ou sortie une force de pression susceptible de la déformer. Cette déformation peut générer des aberrations optiques sur le faisceau lumineux qui traverse ladite fenêtre d'entrée et/ou sortie.

L'idée à la base de l'invention est d'exploiter la propriété selon laquelle les aberrations apportées par la déformation d'une lame transparente sont moindres, lorsque la lame sépare deux milieux d'indices optiques sensiblement égaux.

L'invention propose donc que la fenêtre d'entrée et/ou sortie ne comprenne pas un hublot unique, mais deux hublots séparés par un interstice nommé cavité intercalaire.

En fonctionnement, la cavité intercalaire reçoit le second fluide, d'indice optique prédéterminé, et est munie d'un dispositif d'ajustement de la pression en son sein. Il est possible de choisir le second fluide, de sorte qu'il présente un indice optique sensiblement égal à l'un parmi le fluide fonctionnel et le milieu environnant, et d'ajuster la pression dans la cavité intercalaire de sorte qu'elle soit sensiblement égale à la pression de l'autre parmi le fluide fonctionnel dans la première cavité et le milieu environnant.

En d'autres termes, l'invention permet de réaliser une fenêtre d'entrée et/ou sortie dans laquelle :
- un premier hublot sépare deux milieux à deux pressions différentes l'une de l'autre, mais dont les indices optiques sont sensiblement égaux ; et
- un second hublot sépare deux milieux dont les indices optiques sont différents l'un de l'autre, mais présentant sensiblement la même pression.

Le premier hublot est déformé par la différence de pression entre les deux milieux qu'il sépare. Cependant, comme ces deux milieux présentent des indices optiques sensiblement égaux, la déformation de front d'onde associée à la déformation du premier hublot est moindre, en comparaison avec un hublot unique selon l'art antérieur.

Le second hublot sépare deux milieux dont les indices optiques sont différents l'un de l'autre. Cependant, comme ces deux milieux présentent sensiblement la même pression, le second hublot n'est quasiment pas déformé. Par conséquent, la déformation de front d'onde associée à la déformation du second hublot est moindre, en comparaison avec un hublot unique selon l'art antérieur.

Finalement, la somme des déformations de front d'onde apportées par les deux hublots selon l'invention est inférieure à la déformation de front d'onde apportée par un unique hublot selon l'art antérieur.

En d'autres termes, la fenêtre d'entrée et/ou sortie de l'élément selon l'invention présente, en fonctionnement, des aberrations optiques inférieures à celles que présente une fenêtre d'entrée et/ou sortie à hublot unique telle que décrite dans l'art antérieur.

On peut ainsi limiter une déformation de front d'onde sur un faisceau lumineux traversant la fenêtre d'entrée et/ou sortie, bien que le fluide fonctionnel confiné dans la première enceinte exerce une force de pression sur cette fenêtre.

Cette réduction des aberrations optiques est obtenue de manière particulièrement simple, sans recours à des technologies complexes de type optique adaptative, grâce à de simples équilibrages de pressions et choix d'indices optiques adaptés.

L'invention offre également un ajustement en temps réel à des conditions courantes de pression dans la première enceinte, en ajustant en temps réel la pression dans la cavité intercalaire grâce au dispositif d'ajustement de la pression.

L'invention est particulièrement avantageuse dans le domaine des systèmes d'amplification laser à haute puissance moyenne et haute énergie, en particulier des systèmes d'amplification laser de type cadencé.

En tout état de cause, l'invention présente un intérêt particulier lorsqu'elle est mise en œuvre dans un système optique présentant une taille de pupille élevée, par exemple supérieure ou égale à 100 nm. En effet, les aberrations optiques apportées par un système optique provoquent une déformation de front d'onde dont l'amplitude pic-vallée augmente avec la taille de pupille du système. Il est donc d'autant plus pertinent de limiter ces aberrations, lorsque la taille de pupille est élevée.

De préférence, le faisceau lumineux est un signal laser, généré et/ou amplifié au sein de la première enceinte. Il peut s'agir d'un faisceau lumineux monochromatique, présentant un pic d'émission avec une largeur à mi-hauteur inférieure ou égale à 50 nm, et plus préférentiellement inférieure ou égale à 10 nm voire même inférieure ou égale à 1 nm. L'élément selon l'invention forme alors plus particulièrement un élément d'un amplificateur optique.

De préférence :
- le second fluide présente un indice optique sensiblement égal à celui de l'un parmi le fluide fonctionnel et un milieu environnant entourant ledit élément, à plus ou moins 10% près ; et
- le dispositif d'ajustement de la pression est adapté pour que la pression au sein de la cavité intercalaire soit sensiblement égale à la pression de l'autre parmi le fluide fonctionnel dans la première enceinte et le milieu environnant, à plus ou moins 10% près.

Avantageusement, une épaisseur moyenne du hublot situé du côté de la première enceinte est inférieure à une épaisseur moyenne du hublot situé du côté opposé à la première enceinte.

Selon un premier mode de réalisation :
- le second fluide présente un indice optique sensiblement égal à celui du milieu environnant, à plus ou moins 10% près ; et
- le dispositif d'ajustement de la pression est adapté pour que la pression au sein de la cavité intercalaire soit sensiblement égale à la pression du fluide fonctionnel dans la première enceinte, à plus ou moins 10% près.

La cavité intercalaire et la première enceinte peuvent être reliées ensemble par un conduit obturé par une membrane déformable ou déplaçable, la membrane étant apte à se déformer ou se déplacer en direction de la cavité intercalaire ou de la première enceinte en réponse à une différence entre la pression dans la cavité intercalaire et la pression dans la première enceinte, le conduit et ladite membrane formant ainsi le dispositif d'ajustement de la pression.

En variante, le dispositif d'ajustement de la pression peut comporter :
- un premier capteur de pression, situé dans la première enceinte ;
- un deuxième capteur de pression, situé dans la cavité intercalaire ; et
- un dispositif d'asservissement, recevant en entrée des mesures de pression fournies par les premier et deuxième capteurs de pression, et configuré pour piloter la pression dans la cavité intercalaire de sorte qu'elle soit sensiblement égale à la pression dans la première enceinte.

Selon un deuxième mode de réalisation :
- le second fluide présente un indice optique sensiblement égal à celui du fluide fonctionnel, à plus ou moins 10% près ; et
- le dispositif d'ajustement de la pression est adapté pour que la pression au sein de la cavité intercalaire soit sensiblement égale à la pression dans le milieu environnant, à plus ou moins 10% près.

Le second fluide est avantageusement de même nature que le fluide fonctionnel.

La cavité intercalaire peut être ouverte sur une colonne adaptée à recevoir une quantité variable du second fluide, et elle-même ouverte sur le milieu environnant, ladite colonne formant ainsi le dispositif d'ajustement de la pression.

Selon l'un ou l'autre de ces deux modes de réalisation, la première enceinte peut être encadrée latéralement par deux fenêtres d'entrée et/ou sortie selon l'invention.

Selon une variante avantageuse, l'élément selon l'invention comprend une série d'enceintes juxtaposées, destinées à recevoir en circulation des fluides fonctionnels de même nature, et :
- l'une au moins des enceintes d'extrémité de ladite série est munie d'une fenêtre d'entrée et/ou sortie selon l'invention, et forme une première enceinte selon l'invention ;
- les enceintes sont séparées deux à deux par deux hublots intercalaires respectifs qui délimitent ensemble une région de séparation entre deux enceintes voisines ; et
- chaque région de séparation est destinée à recevoir un fluide de même nature et à une même pression que le second fluide dans la cavité intercalaire de l'au moins une fenêtre d'entrée et/ou sortie.

L'au moins une région de séparation, d'une part, et la cavité intercalaire de l'au moins une enceinte d'extrémité formant une première enceinte, d'autre part, forment ensemble un même logement présentant une pression uniforme dans l'espace.

Le fluide fonctionnel peut être un fluide réfrigérant pour un milieu amplificateur solide.

En variante, le fluide fonctionnel peut constituer un milieu amplificateur.

L'invention concerne également un système d'amplification laser, comportant un élément selon l'invention, et au moins une source d'émission lumineuse adaptée à émettre un faisceau lumineux de pompage optique, en direction de la première enceinte.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1A illustre de manière schématique un premier mode de réalisation d'un élément selon l'invention, pour un système optique ;
- les figures 1B et 1C illustrent respectivement deux variantes du mode de réalisation de la figure 1A ;
- les figures 2 et 3 illustrent respectivement deux autres variantes du mode de réalisation de la figure 1A ;
- la figure 4 illustre de manière schématique un deuxième mode de réalisation d'un élément selon l'invention, pour un système optique ;
- la figure 5 illustre de manière schématique, une autre variante du mode de réalisation de la figure 1A, avec plusieurs enceintes juxtaposées ; et
- la figure 6 illustre de manière schématique, un système d'amplification laser selon l'invention.

### EXPOSÉ DÉTAILLÉ DE MODES DE RÉALISATION PARTICULIERS

Dans la description ci-après, mais de manière non limitative, on décrit plus particulièrement un élément selon l'invention, pour un système d'amplification laser.

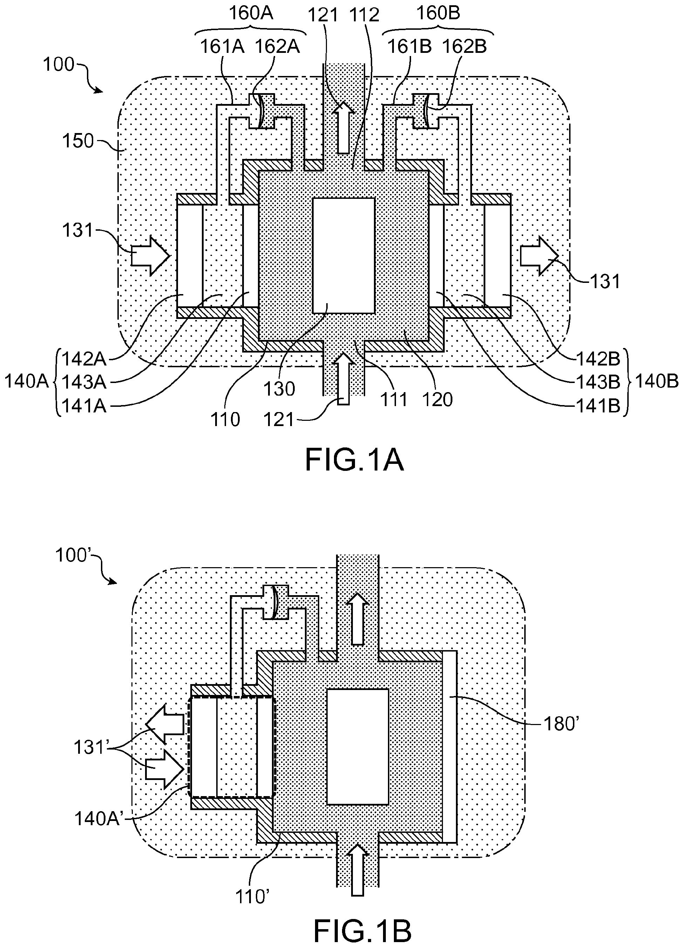

La figure 1A illustre, de manière schématique, un premier mode de réalisation d'un élément 100 selon l'invention, représenté en fonctionnement.

L'élément 100 comporte une première enceinte 110, recevant un fluide fonctionnel 120.

La première enceinte 110 reçoit également un milieu amplificateur solide 130, entièrement immergé dans le fluide fonctionnel 120.

Le milieu amplificateur solide 130 est par exemple un cristal dopé, ou une céramique dopée, ou un verre dopé, etc.

En fonctionnement, le fluide fonctionnel 120 circule dans un circuit d'écoulement de fluide, non représenté, passant par la première enceinte 110. Pour cela, la première enceinte 110 présente une ouverture d'entrée 111 et une ouverture de sortie 112, pour permettre respectivement l'entrée et la sortie du fluide fonctionnel, dans respectivement hors de la première enceinte. Le débit de fluide fonctionnel 120 dans la première enceinte est par exemple compris entre 1 m/s et 5 m/s. Des flèches verticales 121 symbolisent la circulation du fluide fonctionnel 120.

Le fluide fonctionnel 120 peut être un gaz ou un liquide, de préférence un liquide. Ici, le fluide fonctionnel 120 est plus particulièrement un liquide réfrigérant, pour refroidir le milieu amplificateur solide 130 lorsque ce dernier est pompé optiquement par un faisceau lumineux de pompage (non représenté en figure 1A).

Lorsqu'il est pompé optiquement, le milieu amplificateur solide 130 émet ou amplifie un faisceau lumineux monochromatique, nommé signal laser et représenté ici par des flèches 131.

Le fluide fonctionnel 120 est transparent à la longueur d'onde de ce signal laser 131. En d'autres termes, il présente un coefficient de transmission supérieur ou égal à 80% à la longueur d'onde dudit signal laser, et plus préférentiellement supérieur ou égal à 90%, 95% voire 99%.

La première enceinte 110 comprend ici deux fenêtres d'entrée et/ou sortie 140A, 140B, aptes à laisser passer des rayons lumineux à la longueur d'onde du signal laser 131.

Ces fenêtres d'entrée et/ou sortie 140A, 140B s'étendent chacune sur des faces opposées de la première enceinte 110.

L'élément 100 baigne dans un milieu environnant 150.

Lorsque l'élément 100 est laissé à l'air libre, le milieu environnant 150 est formé par de l'air à la pression atmosphérique. En variante, l'élément 100 s'étend dans un boîtier sous vide, le milieu environnant 150 étant alors formé par un vide (gaz raréfié, à une pression inférieure ou égale à un centième de la pression atmosphérique, et même inférieure ou égale à un millième de la pression atmosphérique). Selon une autre variante, l'élément 100 s'étend dans un boîtier rempli d'un fluide autre que l'air. En tout état de cause, l'invention n'est pas limitée par la nature du milieu environnant 150.

On note *nₑₓₜ*, l'indice optique du milieu environnant, et *Pₑₓₜ* sa pression.

De façon similaire, on note *n_{F}*, l'indice optique du fluide fonctionnel 120 et *P_{F}* sa pression dans la première enceinte 110.

Selon l'invention, chaque fenêtre d'entrée et/ou sortie 140A, 140B comporte deux hublots :
- un hublot interne 141A, 141B, situé du côté de la première enceinte 110 ; et
- un hublot externe 142A, 142B, situé du côté opposé à la première enceinte 110.

Chaque hublot interne respectivement externe 141A, 141B, 142A, 142B est transparent à la longueur d'onde du signal laser 131. En d'autres termes, il présente un coefficient de transmission supérieur ou égal à 80% à la longueur d'onde du signal laser 131, et plus préférentiellement supérieur ou égal à 90%, 95% voire 99%.

Ici, mais de manière non limitative, dans chaque fenêtre d'entrée et/ou sortie 140A (respectivement 140B), le hublot interne et le hublot externe s'étendent parallèles entre eux.

Dans chaque fenêtre d'entrée et/ou sortie 140A (respectivement 140B), le hublot interne 141A (respectivement 141B) et le hublot externe 142A (respectivement 142B) délimitent ensemble, latéralement, une cavité intercalaire 143A (respectivement 143B). La cavité intercalaire 143A (respectivement 143B), en fonctionnement, est remplie par un second fluide. Elle est en outre munie d'un dispositif d'ajustement de la pression en son sein 160A (respectivement 160B).

On note *n_{C}*, l'indice optique du second fluide et *P_{C}* sa pression dans la cavité intercalaire 143A (respectivement 143B).

Selon le premier mode de réalisation illustré en figure 1A, l'indice *n_{C}* et la pression *P_{C}* vérifient, en fonctionnement :
- *n_{C}* sensiblement égal à l'indice optique *nₑₓₜ* du milieu environnant, à plus ou moins 20% près, et plus préférentiellement à plus ou moins 10% près (en d'autres termes, *n_{C}* est compris entre 0,8^{∗}*nₑₓₜ* et 1,2^{∗}*nₑₓₜ*, et plus préférentiellement entre 0,9^{∗}*nₑₓₜ* et 1,1^{∗}*nₑₓₜ*, bornes incluses) ; et
- *P_{C}* sensiblement égale à la pression *P_{F}* du fluide fonctionnel 120 à l'intérieur de la première enceinte 110, à plus ou moins 20% près, et plus préférentiellement à plus ou moins 10% près (en d'autres termes, *P_{C}* est compris entre 0,8^{∗}*P_{F}* et 1,2^{∗}*P_{F}*, et plus préférentiellement entre 0,9^{∗}*P_{F}* et 1,1^{∗}*P_{F}*, bornes incluses).

Dans la suite, on considère, un cas idéal dans lequel *n_{C}* = *nₑₓₜ* et *P_{C} = P_{F}.*

De préférence, le second fluide est constitué alors d'un fluide de même nature que le milieu environnant 150.

L'équilibrage des pressions *P_{C}* = *P_{F}* est réalisé par le dispositif d'ajustement de la pression 160A, respectivement 160B.

Dans l'exemple représenté en figure 1A, le dispositif d'ajustement de la pression 160A (respectivement 160B) est configuré pour réaliser l'équilibrage des pressions simplement par un agencement mécanique adapté.

Chaque dispositif d'ajustement de la pression 160A (respectivement 160B), comporte un conduit 161A (respectivement 161B) reliant la première enceinte 110 et la cavité intercalaire correspondante 143A (respectivement 143B). Du côté de la première enceinte 110, le conduit 161A (respectivement 161B) est rempli, en fonctionnement, par le fluide fonctionnel 120. Du côté de la cavité intercalaire 143A (respectivement 143B), le conduit 161A (respectivement 161B) est rempli, en fonctionnement, par le second fluide.

A l'intérieur de chaque conduit 161A (respectivement 161B) s'étend une membrane déformable 162A (respectivement 162B). La membrane déformable 162A (respectivement 162B) est une membrane étanche et fixée sur toute sa périphérie à un périmètre interne du conduit 161A (respectivement 161B). Elle permet de séparer, de manière étanche, une zone du conduit située du côté de la première enceinte 110 et destinée à recevoir le fluide fonctionnel 120, relativement à une zone du conduit située du côté de la cavité intercalaire correspondante et destinée à recevoir le second fluide. Ici, et de manière préférée, le conduit 161A (respectivement 161B) comporte une région de grand diamètre, entre deux régions de diamètre réduit, la membrane déformable 162A (respectivement 162B) étant située dans la région de grand diamètre.

En fonctionnement, la membrane déformable 162A (respectivement 162B) se creuse en direction de la première enceinte ou en direction de la cavité intercalaire correspondante, en fonction d'une différence de pression entre ces dernières. La déformation de la membrane déformable 162A (respectivement 162B) modifie les volumes affectés respectivement au fluide fonctionnel et au second fluide, ce qui permet d'égaliser les pressions dans la première enceinte et dans la cavité intercalaire.

En particulier, lorsque le débit de fluide fonctionnel augmente, la pression de ce dernier dans la première enceinte augmente également. Le fluide fonctionnel exerce alors une force de pression plus importante sur la membrane déformable 612A (respectivement 162B). Celle-ci se déforme, de sorte que le volume disponible pour le fluide fonctionnel augmente, et le volume disponible pour le second fluide diminue. Ainsi, la pression dans la première enceinte diminue et la pression dans la cavité intercalaire augmente.

De manière symétrique, lorsque le débit de fluide fonctionnel diminue, la membrane se déforme, de sorte que la pression dans la première enceinte augmente et la pression dans la cavité intercalaire diminue.

La déformation de la membrane déformable 162A (respectivement 162B) permet ainsi un équilibrage en temps réel entre la pression dans la première enceinte et la pression dans la cavité intercalaire, de façon à obtenir et conserver la condition *P_{C}* = *P_{F}.*

En fonctionnement, le signal laser 131 traverse au moins une fois chaque fenêtre d'entrée et/ou sortie 140A (respectivement 140B). De préférence, il traverse une seule fois chaque fenêtre d'entrée et/ou sortie 140A (respectivement 140B). En variante, il peut effectuer des allers et retours entre les miroirs d'une cavité optique résonante, et traverser alors plusieurs fois chaque fenêtre d'entrée et/ou sortie 140A (respectivement 140B).

Lorsque le signal laser 131 traverse la fenêtre d'entrée et/ou sortie 140A (respectivement 140B), il traverse successivement, dans un ordre ou dans l'autre, le hublot externe 142A (respectivement 142B) et le hublot interne 141A (respectivement 141B).

Le hublot externe 142A (respectivement 142B) sépare le milieu environnant et le milieu dans la cavité intercalaire 143A (respectivement 143B). Il sépare donc ici deux milieux à des pressions différentes, le milieu environnant présentant par exemple une pression basse *Pₑₓₜ*, et le milieu dans la cavité intercalaire présentant par exemple une pression élevée *P_{C}* = *P_{F}.* Le hublot externe 142A (respectivement 142B) est donc mécaniquement déformé par la différence de pression entre ces deux milieux. Ces milieux présentent cependant un même indice optique *nₑₓₜ.* Par conséquent, la déformation mécanique du hublot externe 142A (respectivement 142B) se traduit par une faible dégradation de la qualité de faisceau du signal laser 131.

Le hublot interne 141A (respectivement 141B) sépare le milieu dans la cavité intercalaire 143A (respectivement 143B) et le milieu dans la première enceinte. Il sépare donc ici deux milieux d'indices optiques différents, *n_{C}* = *nₑₓₜ* respectivement *n_{F}.* Une déformation mécanique du hublot interne 141A (respectivement 141B) se traduirait donc par une forte dégradation de la qualité de faisceau du signal laser 131. Cependant, les deux milieux de part et d'autre du hublot interne présentent la même pression *P_{C}* = *P_{F}.* Par conséquent, le hublot interne 141A (respectivement 141B) n'est pas ou peu déformé mécaniquement, ce qui se traduit par une faible dégradation de la qualité de faisceau du signal laser 131.

Au total, la traversée successive du hublot interne 141A (respectivement 141B) et du hublot externe 142A (respectivement 142B) génère, sur le signal laser 131, une déformation de front d'onde moindre en comparaison avec la déformation de front d'onde apportée, dans l'art antérieur, par un hublot unique. L'invention permet donc de réduire une déformation de front d'onde sur le signal laser 131.

On a illustré ci-dessus le cas dans lequel *n_{C}* = *nₑₓₜ* et *P_{C}* = *P_{F}.* On peut cependant obtenir une amélioration relativement à l'art antérieur, en dehors de ce cas idéal, et à l'intérieur d'une plage de valeurs telle que décrite ci-dessus.

Afin de limiter une dégradation de la qualité de faisceau, liée à la traversée de la fenêtre d'entrée et/ou sortie, une solution très simple aurait pu consister à relâcher les contraintes mécaniques sur le montage d'un hublot unique, de manière à limiter sa déformation mécanique, en fonctionnement. Une telle solution pourrait cependant se traduire par des défauts d'étanchéité au niveau du hublot. Au contraire, selon l'invention, l'étanchéité de la fenêtre d'entrée et/ou sortie est garantie.

Selon une variante non représentée, la membrane déformable est remplacée par une membrane déplaçable, ou piston mobile, apte à se déplacer en translation dans le conduit en fonction d'une différence entre la pression dans la première enceinte et la pression dans la cavité intercalaire correspondante.

Selon une autre variante, 100', illustrée en figure 1B, la première enceinte 110' comprend une unique fenêtre d'entrée et/ou sortie 140A' telle que décrite ci-dessus. Dans ce cas, un miroir 180', réfléchissant à la longueur d'onde du signal laser 131', s'étend à l'intérieur de la première enceinte 110', du côté opposé à la fenêtre d'entrée et/ou sortie 140A'.

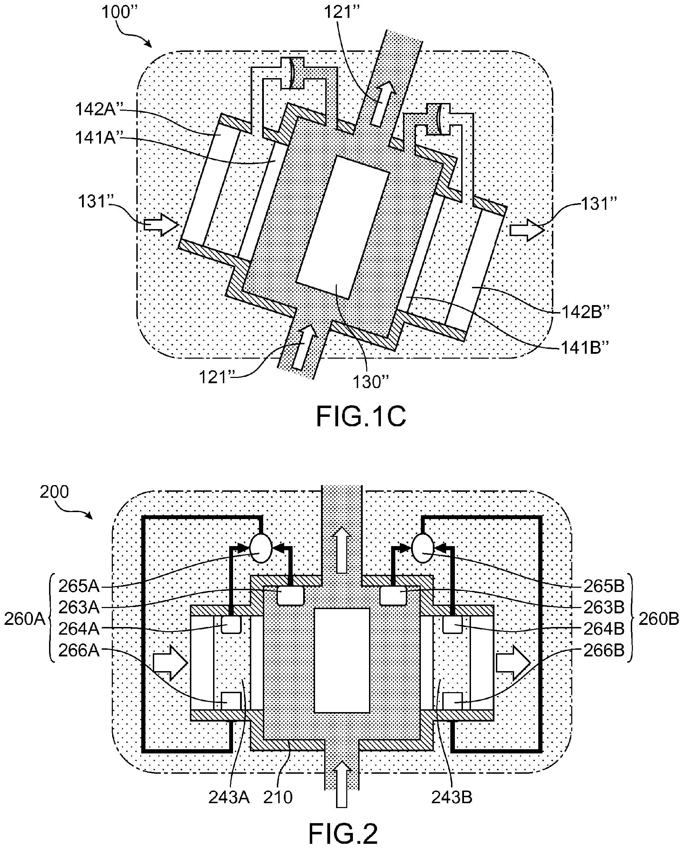

Selon une autre variante, 100", illustrée en figure 1C, l'élément 100" est agencé de façon que le signal laser 131" arrive sur les hublots internes et externes, 141A", 142A", 141B", 142B", avec une incidence différente de l'incidence normale. En particulier, l'élément 100" peut être agencé de façon que le signal laser 131" arrive sur les hublots internes et externes, 141A", 142A", 141B", 142B", avec une incidence proche de l'incidence de Brewster, pour laquelle il n'y a pas de pertes par réflexion. Un tel agencement peut permettre de s'affranchir d'un traitement anti-reflet sur les hublots. La valeur de l'incidence de Brewster se rapporte en réalité à une seule interface, et dépend des indices optiques des milieux de chaque côté de l'interface. Par conséquent, tous les hublots 141A", 142A", 141B", 142B"ne sont pas associés à une même valeur de l'incidence de Brewster. L'incidence du signal laser 131" sur ces derniers est donc un compromis, permettant de minimiser le total des pertes par réflexion à la traversée

La figure 2 illustre une variante 200 de l'élément selon l'invention, qui ne diffère du mode de réalisation de la figure 1A qu'en ce que chaque dispositif d'ajustement de la pression 260A (respectivement 260B) comporte un système d'asservissement comprenant :
- un capteur de pression 263A (respectivement 263B), situé dans la première enceinte 210 ;
- un capteur de pression 264A (respectivement 264B), situé dans la cavité intercalaire correspondante 243A (respectivement 243B) ;
- un calculateur 265A (respectivement 265B), recevant en entrée les mesures fournies par les deux capteurs de pression 263A, 264A (respectivement 263B, 264B) et générant en sortie une consigne de pression ; et
- un élément de pilotage de la pression 266A (respectivement 266B) situé dans la cavité intercalaire correspondante 243A (respectivement 243B), recevant en entrée la consigne de pression et modifiant en réponse la pression dans ladite cavité intercalaire.

Le calculateur 265A (respectivement 265B) est configuré pour comparer les mesures de pression fournies par respectivement par le capteur 263A et par le capteur 264A (respectivement 263B et 264B), et pour générer en réponse une consigne de pression adaptée pour égaliser les mesures fournies par les deux capteurs.

Ladite consigne est reçue par l'élément de pilotage de la pression 266A (respectivement 266B), apte à modifier la pression dans la cavité intercalaire correspondante 243A (respectivement 243B) en réponse à la consigne reçue. Sur la figure 2, l'élément de pilotage de la pression 266A (respectivement 266B) est représenté de façon très schématique. En pratique, il peut comprendre un conduit, en communication de fluide avec la cavité intercalaire correspondante, et fermé par un piston mobile dont la position dans le conduit modifie la pression dans la cavité intercalaire. De nombreuses solutions pour piloter une valeur de pression dans un environnement fermé peuvent également être mises en œuvre, sans sortir du cadre de l'invention.

Chaque dispositif d'ajustement de la pression 260A (respectivement 260B) comporte ici un capteur respectif situé dans la première enceinte 210. En variante, ils peuvent partager un même capteur de pression situé dans la première enceinte 210.

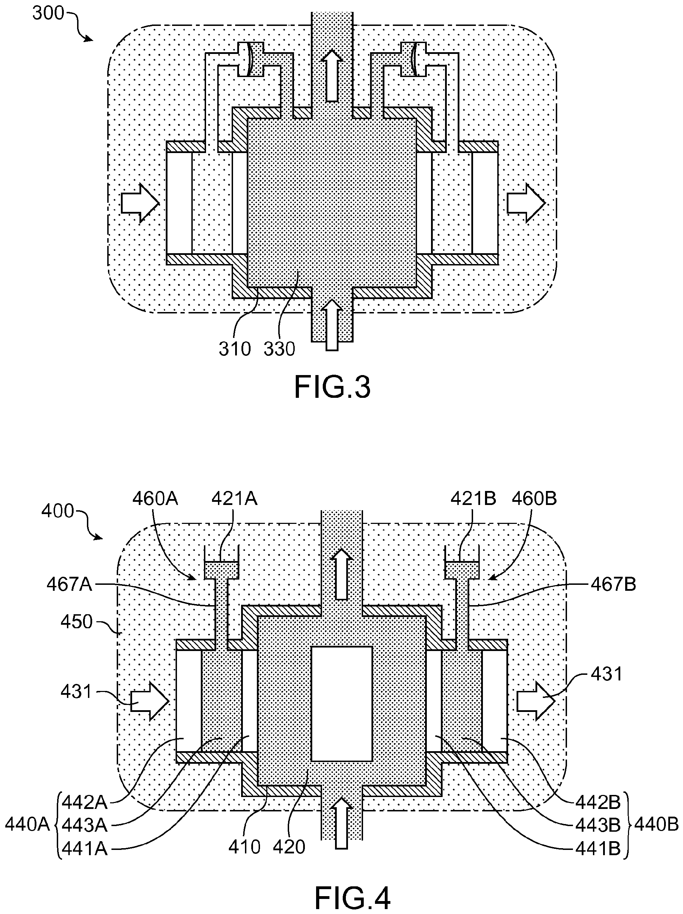

La figure 3 illustre une variante 300 de l'élément selon l'invention, qui ne diffère du mode de réalisation de la figure 1A qu'en ce que le fluide fonctionnel 320 est un fluide d'amplification optique, formant le milieu amplificateur d'un système d'amplification laser de type « laser à colorant ». Un tel fluide comporte généralement des molécules organiques diluées dans un solvant. Dans cette variante, il n'y a pas de milieu amplificateur solide à l'intérieur de la première enceinte 310, en fonctionnement.

La figure 4 illustre de manière schématique un deuxième mode de réalisation 400 d'un élément selon l'invention.

Selon ce mode de réalisation, l'indice *n_{C}* et la pression *P_{C}* du milieu dans les cavités intercalaires 443A, 443B vérifient, en fonctionnement :
- *n_{C}* sensiblement égal à l'indice optique *n_{F}* du fluide fonctionnel 420, à plus ou moins 20% près, et plus préférentiellement à plus ou moins 10% près (en d'autres termes, *n_{C}* est compris entre 0,8^{∗}*n_{F}* et 1,2^{∗}*n_{F}*, et plus préférentiellement entre 0,9^{∗}*n_{F}* et 1,1^{∗}*n_{F}*, bornes incluses) ; et
- *P_{C}* sensiblement égale à la pression *Pₑₓₜ* du milieu environnant 450, à plus ou moins 20% près, et plus préférentiellement à plus ou moins 10% près (en d'autres termes, *P_{C}* est compris entre 0,8^{∗}*Pₑₓₜ* et 1,2^{∗}*Pₑₓₜ*, et plus préférentiellement entre 0,9^{∗}*Pₑₓₜ* et 1,1^{∗}*Pₑₓₜ*, bornes incluses).

Dans la suite, on considère, un cas idéal dans lequel on a *n_{C}* = *n_{F}* et *P_{C}* = *Pₑₓₜ.*

De préférence, le second fluide est constitué alors d'un fluide de même nature que le fluide fonctionnel 420.

L'équilibrage des pressions *P_{C}* = *Pₑₓₜ* est réalisé par le dispositif d'ajustement de la pression 460A, respectivement 460B. Dans l'exemple représenté en figure 4, le dispositif d'ajustement de la pression 460A (respectivement 460B) est configuré pour réaliser l'équilibrage des pressions simplement par un agencement mécanique adapté.

Chaque dispositif d'ajustement de la pression 460A (respectivement 460B), comporte une colonne 467A (respectivement 467B), en communication de fluide avec la cavité intercalaire correspondante 443A (respectivement 443B).

La colonne 467A (respectivement 467B) s'étend selon un axe parallèle à l'axe de la pesanteur, ou inclinée relativement à cet axe d'un angle préférentiellement inférieur ou égal à 45°.

La colonne 467A (respectivement 467B) est ouverte sur le milieu environnant 450, du côté opposé à la cavité intercalaire 443A (respectivement 443B). En fonctionnement, la colonne 467A (respectivement 467B) est remplie par le second fluide, du côté de la cavité intercalaire 443A (respectivement 443B), et par le fluide ou le vide du milieu environnant, du côté du milieu environnant 450.

Ici, et de manière préférée, la colonne 467A (respectivement 467B) comporte une région de grand diamètre, séparée de la cavité intercalaire 443A (respectivement 443B) par une région de diamètre réduit. Une interface 421A (respectivement 421B), dans la colonne, entre le second fluide et le fluide ou le vide du milieu environnant, se trouve avantageusement dans cette région de grand diamètre.

En fonctionnement, l'interface 421A (respectivement 421B) se place naturellement à la position réalisant un accord de pression entre la pression dans le milieu environnant 450, et la pression du second fluide dans la cavité intercalaire 443A (respectivement 443B). Si l'une des deux pressions est modifiée, notamment la pression dans le milieu environnant, l'interface 421A (respectivement 421B) se déplace le long de l'axe de la pesanteur, de façon à retrouver la condition *P_{C}* = *Pₑₓₜ.*

La colonne 467A (respectivement 467B), ouverte sur le milieu environnant 450, permet ainsi un équilibrage en temps réel entre la pression dans le milieu environnant et la pression dans la cavité intercalaire, pour obtenir et conserver la condition *P_{C}* = *Pₑₓₜ.*

En fonctionnement, le signal laser 431 généré dans la première enceinte 410 traverse au moins une fois l'au moins une fenêtre d'entrée et/ou sortie 440A, 440B.

Lorsque le signal laser 431 traverse la fenêtre d'entrée et/ou sortie 440A (respectivement 440B), il traverse successivement, dans un ordre ou dans l'autre, le hublot externe 442A (respectivement 442B) et le hublot interne 441A (respectivement 441B).

Le hublot externe 442A (respectivement 442B) sépare le milieu environnant et le milieu dans la cavité intercalaire 443A (respectivement 443B). Il sépare donc ici deux milieux d'indices optiques différents, *nₑₓₜ* respectivement *n_{C}* = *n_{F}.* Une déformation mécanique du hublot externe 442A (respectivement 442B) se traduirait par une forte dégradation de la qualité de faisceau du signal laser 431. Cependant, les deux milieux de part et d'autre du hublot externe présentent la même pression *P_{C}* = *Pₑₓₜ*, de sorte que le hublot externe 442A (respectivement 442B) n'est pas ou peu déformé. Par conséquent, la traversée du hublot externe 442A (respectivement 442B) se traduit par une faible dégradation de la qualité de faisceau du signal laser 431.

Le hublot interne 441A (respectivement 441B) sépare le milieu dans la cavité intercalaire 443A (respectivement 443B) et le milieu dans la première enceinte. Il sépare donc ici deux milieux à des pressions différentes, le milieu dans la cavité intercalaire présentant par exemple une pression basse *P_{C}* = *Pₑₓₜ*, et le milieu dans la première enceinte présentant par exemple une pression élevée *P_{F}.* Le hublot interne 441A (respectivement 441B) est donc mécaniquement déformé par la différence de pression entre ces deux milieux. Cependant, ces deux milieux présentent ici un même indice optique *n_{F}.* Par conséquent, la déformation mécanique du hublot interne 441A (respectivement 441B) se traduit par une faible dégradation de la qualité de faisceau du signal laser 431.

Au total, la traversée successive du hublot interne 441A (respectivement 441B) et du hublot externe 442A (respectivement 442B) génère, sur le signal laser 431, une déformation de front d'onde moindre en comparaison avec la déformation de front d'onde apportée, dans l'art antérieur, par un hublot unique.

On a illustré ci-dessus le cas dans lequel *n_{C}* = *n_{F}* et *P_{C} = Pₑₓₜ.* On peut cependant obtenir une amélioration relativement à l'art antérieur, en dehors de ce cas idéal, et à l'intérieur d'une plage de valeurs telle que décrite ci-dessus.

Il s'agit en fait, dans le premier et dans le deuxième modes de réalisation, illustrés respectivement à la figure 1A et à la figure 4, d'une même idée qui consiste à décomposer un saut de la pression et de l'indice optique conjointement, en un saut de la pression et un saut de l'indice optique séparément. Dans les deux cas, un hublot unique est remplacé par un couple de deux hublots délimitant une cavité intercalaire dans laquelle on peut contrôler l'indice optique et la pression.

Les variantes du premier mode de réalisation, illustrées notamment aux figures 1A, 1B, 2 et 3, peuvent s'adapter au mode de réalisation de la figure 4. En particulier, l'ajustement de pression peut mettre en œuvre un système d'asservissement par des mesures de pression. De même, le fluide fonctionnel peut être un fluide d'amplification optique.

En outre, une même enceinte peut être fermée par deux fenêtres d'entrée et/ou sortie, chacune selon un mode de réalisation différent parmi le premier et le deuxième modes de réalisation selon l'invention.

Dans chacun des modes de réalisation de l'invention, les hublots interne et externe peuvent être chacun constitués d'une lame à faces parallèles.

En variante, l'un au moins desdits hublots présente, au repos, une épaisseur variable dans l'espace, adaptée pour limiter les aberrations optiques de la fenêtre d'entrée et/ou sortie, en fonctionnement. La forme du hublot au repos, désigne sa forme en l'absence de contraintes mécaniques liées à une différence de pression entre les deux milieux qu'il sépare. On combine alors une correction statique, permettant de s'affranchir d'une composante principale des aberrations optiques, et une composante adaptative, permettant de s'affranchir d'une composante résiduelle des aberrations optiques. La composante principale peut être associée à une valeur prédéterminée du débit de fluide fonctionnel. La composante résiduelle se rapporte alors à un écart entre la valeur courante et ladite valeur prédéterminée du débit de fluide fonctionnel. On peut ainsi adapter en temps réel la correction des aberrations optiques, en fonction d'une variation de débit du fluide fonctionnel dans la première enceinte. Cette variation de débit peut être liée à une variation d'un besoin en refroidissement, par exemple lorsque l'on augmente une cadence de génération des impulsions laser. La variation de débit peut également dépendre d'autres facteurs tels que le vieillissement du système de pompage du fluide fonctionnel. L'adaptation en temps réel de la correction des aberrations est réalisée en ajustant en temps réel la pression dans la cavité intercalaire, grâce au dispositif d'ajustement de la pression.

On remarque que la qualité de faisceau d'un faisceau lumineux de forte intensité traversant une fenêtre d'entrée et/ou sortie peut être dégradée par une trop grande épaisseur cumulée des hublots interne et externe. Or, l'invention permet de recourir à une épaisseur réduite du hublot interne, ce qui permet de limiter cette épaisseur cumulée. En particulier, le fait de doubler le nombre de hublots ne double pas l'épaisseur cumulée des hublots, contrairement aux préjugés de l'homme du métier.

Dans le premier mode de réalisation, le hublot interne sépare deux milieux sensiblement à la même pression. Il est donc soumis à des forces mécaniques restreintes, de sorte qu'il peut présenter une épaisseur réduite.

Dans le deuxième mode de réalisation, le hublot interne sépare deux milieux à des pressions différentes, de sorte qu'il est soumis à des forces mécaniques importantes. Comme ces deux milieux présentent sensiblement le même indice optique, la déformation mécanique du hublot interne impacte peu la qualité optique du faisceau qui le traverse. On peut donc tolérer une plus grande déformation mécanique du hublot interne, et donc une plus faible épaisseur de ce dernier.

Le rapport entre l'épaisseur et le diamètre du hublot interne est par exemple inférieur ou égal à 1/25, et même inférieur ou égal à 1/50.

Le rapport entre l'épaisseur du hublot interne et l'épaisseur du hublot externe est par exemple inférieur ou égal à 0,5 voire inférieur ou égal à 0,3 ou même 0,2.

Lorsque le hublot interne ou externe n'est pas une lame à face parallèle, son épaisseur est une épaisseur moyenne sur l'ensemble de sa surface.

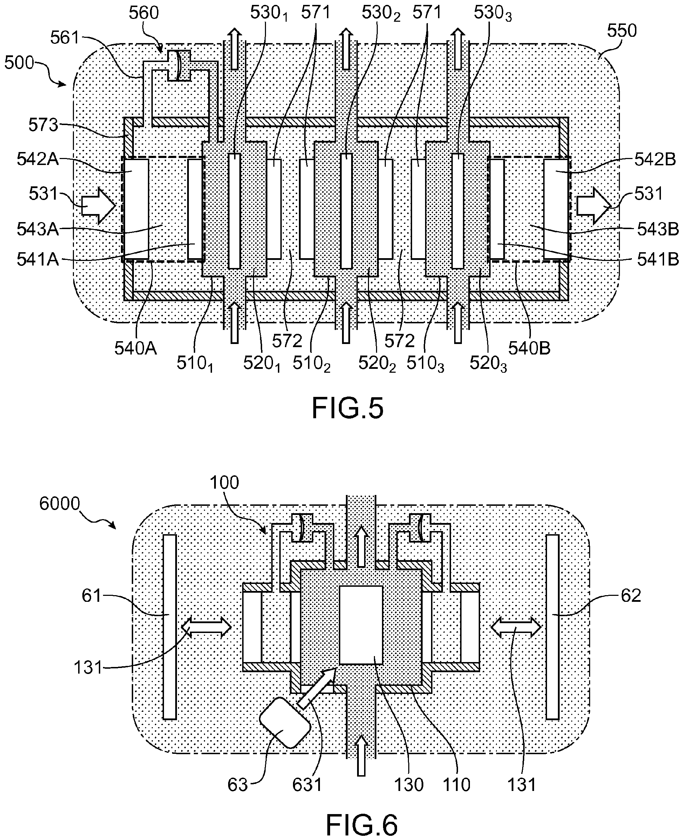

La figure 5 illustre une variante 500 du mode de réalisation de la figure 1A, comportant une pluralité d'enceintes 510₁, 510₂, 510₃ recevant chacune un fluide fonctionnel 520₁, 520₂, 520₃, en circulation.

Chaque enceinte 510₁, 510₂, 510₃ reçoit également un amplificateur solide, dit élémentaire, 530₁, 530₂, 530₃. Chaque fluide fonctionnel 520₁, 520₂, 520₃ est un fluide réfrigérant, apte à refroidir l'un des milieux amplificateurs élémentaires. Cet agencement permet de combiner un refroidissement efficace avec les avantages d'un milieu amplificateur épais. L'agencement de chaque milieu amplificateur élémentaire dans une enceinte dédiée permet en outre de limiter une épaisseur cumulée de fluide fonctionnel, et ainsi de limiter une dégradation de faisceau liée à la présence du fluide fonctionnel (dégradation de faisceau liée notamment à l'absorption dans le spectre d'émission laser et aux effets thermo-hydrauliques du fluide fonctionnel).

Les enceintes 510₁, 510₂, 510₃ présentent toutes les mêmes dimensions, et sont adaptées chacune à recevoir un fluide de même nature. On considère donc qu'elles présentent toutes, en fonctionnement, une même pression interne. Le cas échéant, l'élément 500 selon l'invention peut comprendre un dispositif de pilotage de la pression dans les enceintes, pour s'assurer qu'elles présentent toutes une même pression interne.

Les enceintes 510₁, 510₂, 510₃ sont agencées en parallèles, juxtaposées les unes à la suite à côté des autres, ici entre deux fenêtres d'entrée et/ou sortie 540A, 540B selon l'invention. Les deux enceintes d'extrémité, ici 510₁ et 510₃, sont donc munies chacune d'une telle fenêtre d'entrée et/ou sortie 540A, 540B. Elles forment chacune une première enceinte selon l'invention.

Les enceintes 510₁, 510₂, 510₃ sont séparées deux à deux par un premier hublot intercalaire 571, fermant l'une enceinte, un second hublot intercalaire 571, fermant l'autre enceinte, et une région de séparation 571, entre ces deux hublots.

Les hublots intercalaires 572 sont chacun transparents à la longueur d'onde du signal laser 531. En d'autres termes, chacun de ces hublots présente un coefficient de transmission supérieur ou égal à 80% à la longueur d'onde dudit signal laser, et plus préférentiellement supérieur ou égal à 90%, 95% voire 99%.

Chaque région de séparation 571 est destinée à recevoir un fluide présentant sensiblement le même indice optique et sensiblement la même pression que le second fluide dans la cavité intercalaire 543A, respectivement 543B de l'une des fenêtres d'entrée et/ou sortie 540A, 540B.

Ici, chaque région de séparation 571 reçoit un fluide présentant sensiblement le même indice optique que le fluide du milieu environnant, et sensiblement à la même pression que le fluide fonctionnel dans l'une ou l'autre des enceintes 510₁, 510₂, 510₃.

Chaque hublot intercalaire 571 sépare donc deux milieux d'indices optiques différents, mais à une même pression. Chaque hublot intercalaire 571 présente donc une déformation mécanique négligeable, de sorte qu'il ne dégrade quasiment pas la qualité de faisceau du signal laser 531 traversant l'élément 500.

On réalise ainsi une amplification optique à l'aide de plusieurs milieux amplificateurs solides élémentaires, en limitant une épaisseur cumulée de fluide fonctionnel et en limitant une dégradation de faisceau lié à la multiplication des interfaces optiques.

De manière avantageuse, et comme illustré en figure 5, les cavités intercalaires 543A, 543B et les régions de séparation 572 sont agencées ensemble en circulation de fluide. Les différentes enceintes 510₁, 510₂, 510₃ sont situées alors à l'intérieur d'un même logement 573. Ainsi, par construction, les deux cavités intercalaires 543A, 543B et les régions de séparation 572 présentent toutes une même pression et sont adaptées à recevoir le même fluide.

Le logement 573 est muni, sur deux faces opposées, des hublots externes respectifs 542A, 542B des deux fenêtres d'entrée et/ou sortie 540A, 540B. A l'intérieur du logement 573 s'étendent les différentes enceintes, munies chacune de deux hublots (deux hublots intercalaires 571, pour les enceintes centrales, ou un hublot intercalaire et un hublot interne 541A, 541B, pour les enceintes d'extrémité).

Dans l'exemple représenté en figure 5, le logement 573 reçoit un fluide de même nature que le fluide dans le milieu environnant 550, et à une même pression que le fluide fonctionnel dans chacune des enceintes 510₁, 510₂, 510₃.

Le logement 573 est muni ici d'un dispositif d'ajustement de la pression 560, tel que décrit en référence à la figure 1A, comprenant un conduit 561 reliant l'une des enceintes 510₁, 510₂, 510₃ et l'intérieur du logement 573.

Différentes variantes peuvent être mises en œuvre sans sortir du cadre de l'invention, par exemple avec un dispositif d'ajustement de la pression tel que décrit en référence à la figure 2, ou avec des régions de séparation cloisonnées et munies chacune de leur propre dispositif d'ajustement de la pression, etc.

Selon d'autres variantes, chaque région de séparation reçoit un fluide présentant sensiblement le même indice optique que le fluide fonctionnel, et sensiblement à la même pression que le fluide ou le vide du milieu environnant.

Dans ce cas, chaque hublot intercalaire sépare deux milieux à des pressions différentes, mais de même indice optique. Chaque hublot intercalaire présente donc une déformation mécanique, mais qui dégrade peu la qualité de faisceau du signal laser traversant l'élément selon l'invention.

Là-encore, différentes variantes peuvent être mises en œuvre, par exemple avec un logement recevant les plusieurs enceintes et muni d'un unique dispositif d'ajustement de la pression (par exemple tel que décrit en référence à la figure 4), ou avec des régions de séparation cloisonnées et munies chacune de leur propre dispositif d'ajustement de la pression.

La figure 6 représente un système d'amplification laser 6000 comportant un élément 100 tel que décrit en référence à la figure 1A.

L'élément 100 est disposé ici entre deux miroirs 61, 62, réfléchissants à la longueur d'onde du signal laser 131. Les miroirs 61, 62 forment ensemble une cavité optiquement résonante, pour multiplier un nombre de passages par le milieu amplificateur 130.

Le système d'amplification laser 6000 comporte, en outre, au moins une source lumineuse 63, adaptée à émettre un faisceau lumineux 631 dit faisceau de pompage. Le faisceau de pompage 631 fournit au milieu amplificateur 130 l'énergie nécessaire à la génération du signal laser 131.

La source lumineuse 63 s'étend à l'extérieur de la première enceinte 110. Afin que le faisceau de pompage 631 puisse entrer dans la première enceinte 110, cette dernière est munie d'une fenêtre d'entrée 64. Bien que non représentée sur les figures 1 à 5, cette fenêtre d'entrée est avantageusement présente dans tous les modes de réalisation d'un élément selon l'invention pour un système d'amplification laser. La qualité optique du faisceau de pompage 631 n'est pas critique pour le bon fonctionnement du système d'amplification laser 6000. La fenêtre d'entrée 64 peut donc être constituée d'un simple hublot, transparent à la longueur d'onde du faisceau de pompage 631.

En variante, le système d'amplification laser selon l'invention comporte la source lumineuse adaptée à émettre un faisceau de pompage, et l'élément selon l'invention n'est pas disposé à l'intérieur d'une cavité optiquement résonante. Dans ce cas, le signal laser n'est pas généré dans la première enceinte, mais simplement amplifié lors de la traversée de la première enceinte. Le faisceau de pompage fournit alors au milieu amplificateur l'énergie nécessaire à l'amplification signal laser.

De nombreuses variantes d'un système d'amplification laser selon l'invention peuvent être mises en œuvre, comportant l'un ou l'autre des modes de réalisation et variantes d'un élément selon l'invention, comportant ou non une cavité optiquement résonante, comportant une ou plusieurs sources lumineuses d'émission d'un faisceau de pompage, etc.

L'invention est particulièrement avantageuse dans le domaine des amplificateurs lasers refroidis par liquide. Pour autant, elle trouve également à s'appliquer dans d'autres domaines, notamment des domaines où il peut être avantageux de refroidir par fluide réfrigérant un élément absorbant une énergie optique. L'élément absorbant une énergie optique peut comprendre un cristal convertisseur de fréquence, ou un cristal biréfringent tel que mis en œuvre dans une cellule de Pockels. Le refroidissement par fluide réfrigérant peut être avantageux notamment lorsque l'élément absorbant une énergie optique reçoit un faisceau lumineux sous la forme d'un signal impulsionnel de haute intensité. L'invention trouve également à s'appliquer dans le domaine des lasers à colorant.

L'invention offre une correction de surface d'onde dynamique, grâce à la possibilité d'ajuster en temps réel la pression dans la cavité intercalaire de la fenêtre d'entrée et/ou sortie. Elle offre également une grande simplicité de mise en œuvre et un encombrement restreint, en s'affranchissant de dispositifs externes tels que des miroirs à conjugaison de phase.

## Revendications

1. Elément (100; 100'; 100"; 200; 300; 400; 500) d'un système optique comportant :
- une première enceinte (110; 110'; 210; 310; 410; 510₁; 510₃), destinée à recevoir en circulation un premier fluide (120; 320; 420; 520₁; 520₂; 520₃), nommé fluide fonctionnel ; et
- au moins une fenêtre d'entrée et/ou sortie (140A; 140A'; 140B; 440A; 440B; 540A; 540B), située sur la première enceinte, et apte à laisser passer un faisceau lumineux (131; 131'; 131"; 431; 531) dans et/ou hors de la première enceinte ;
dans lequel la fenêtre d'entrée et/ou sortie (140A ; 140A' ; 140B ; 440A ; 440B ; 540A ; 540B) comporte deux hublots (142A, 141A; 142B, 141B; 142A", 141A"; 142B", 141B" ; 442A, 441A ; 442B, 441B ; 542A, 541A ; 542B, 541B) qui délimitent latéralement une cavité dite intercalaire (143A; 143B; 243A; 243B; 443A; 443B; 543A; 543B), adjacente à la première enceinte, et en ce que ladite cavité intercalaire est destinée à recevoir un second fluide, d'indice optique prédéterminé, et est munie d'un dispositif d'ajustement de la pression en son sein (160A; 160B; 260A; 260B ; 460A ; 460B ; 560), **caractérisé en ce que** :
- le second fluide présente un indice optique sensiblement égal à celui de l'un parmi le fluide fonctionnel (120 ; 320 ; 420 ; 520₁ ; 520₂ ; 520₃) et un milieu environnant (150 ; 450 ; 550) entourant ledit élément, à plus ou moins 10% près ; et
- le dispositif d'ajustement de la pression (160A ; 160B ; 260A ; 260B ; 460A ; 460B ; 560) est adapté pour que la pression au sein de la cavité intercalaire (143A ; 143B ; 443A ; 443B ; 543A ; 543B) soit sensiblement égale à la pression de l'autre parmi le fluide fonctionnel (120 ; 320 ; 420 ; 520₁ ; 520₂ ; 520₃) dans la première enceinte et le milieu environnant (150 ; 450 ; 550), à plus ou moins 10% près.

2. Elément (100; 100'; 100"; 200; 300; 400; 500) selon la revendication 1, **caractérisé en ce qu'**une épaisseur moyenne du hublot (141A; 141B; 141A" ; 141B" ; 441A ; 441B ; 541A ; 541B) situé du côté de la première enceinte est inférieure à une épaisseur moyenne du hublot (142A ; 142B ; 142A" ; 142B" ; 442A ; 442B ; 542A; 542B) situé du côté opposé à la première enceinte.

3. Elément (100; 100'; 100"; 200; 300; 500) selon la revendication 1 ou 2, **caractérisé en ce que** :
- le second fluide présente un indice optique sensiblement égal à celui du milieu environnant (150 ; 550), à plus ou moins 10% près ; et
- le dispositif d'ajustement de la pression (160A; 160B; 260A; 260B; 560) est adapté pour que la pression au sein de la cavité intercalaire (143A ; 143B ; 243A ; 243B; 543A; 543B) soit sensiblement égale à la pression du fluide fonctionnel (120; 320 ; 520₁; 520₂; 520₃) dans la première enceinte, à plus ou moins 10% près.

4. Elément (100 ; 100' ; 100" ; 300 ; 500) selon la revendication 3, **caractérisé en ce que** la cavité intercalaire (143A ; 143B ; 543A ; 543B) et la première enceinte (110 ; 110' ; 310 ; 510₁ ; 510₃) sont reliées ensemble par un conduit (161A ; 161B ; 561) obturé par une membrane (162A; 162B) déformable ou déplaçable, la membrane (162A; 162B) étant apte à se déformer ou se déplacer en direction de la cavité intercalaire ou de la première enceinte en réponse à une différence entre la pression dans la cavité intercalaire (143A; 143B ; 543A; 543B) et la pression dans la première enceinte (110; 100'; 310; 510₁ ; 510₃), le conduit et ladite membrane formant ainsi le dispositif d'ajustement de la pression (160A ; 160B).

5. Elément (200) selon la revendication 3, **caractérisé en ce que** le dispositif d'ajustement de la pression (260A ; 260B) comporte :
- un premier capteur de pression (263A ; 263B), situé dans la première enceinte (210) ;
- un deuxième capteur de pression (264A; 264B), situé dans la cavité intercalaire ; et
- un dispositif d'asservissement (265A, 266A; 265B, 266B), recevant en entrée des mesures de pression fournies par les premier et deuxième capteurs de pression, et configuré pour piloter la pression dans la cavité intercalaire (243A ; 243B) de sorte qu'elle soit sensiblement égale à la pression dans la première enceinte (210).

6. Elément (400) selon la revendication 1 ou 2, **caractérisé en ce que** :
- le second fluide présente un indice optique sensiblement égal à celui du fluide fonctionnel (420), à plus ou moins 10% près ; et
- le dispositif d'ajustement de la pression (460A ; 460B) est adapté pour que la pression au sein de la cavité intercalaire (443A ; 443B) soit sensiblement égale à la pression dans le milieu environnant (450), à plus ou moins 10% près.

7. Elément (400) selon la revendication 6, **caractérisé en ce que** le second fluide est de même nature que le fluide fonctionnel (420).

8. Elément (400) selon la revendication 6 ou 7, **caractérisé en ce que** la cavité intercalaire (443A ; 443B) est ouverte sur une colonne (467A ; 467B) adaptée à recevoir une quantité variable du second fluide, et elle-même ouverte sur le milieu environnant (450), ladite colonne formant ainsi le dispositif d'ajustement de la pression (460A ; 460B).

9. Elément (100 ; 100" ; 200 ; 300 ; 400) selon l'une quelconque des revendications 1 à 8, **caractérisé en ce que** la première enceinte (110; 210; 310; 410) est encadrée latéralement par deux fenêtres d'entrée et/ou sortie (140A ; 140B ; 440A ; 440B), chacune de ces deux fenêtres d'entrée et/ou sortie étant située sur la première enceinte et apte à laisser passer un faisceau lumineux dans et/ou hors de la première enceinte, et chacune de ces deux fenêtres d'entrée et/ou sortie comportant deux hublots respectifs (142A, 141A; 142B, 141B; 142A", 141A" ; 142B", 141B" ; 442A, 441A; 442B, 441B) qui délimitent latéralement une cavité intercalaire respective (143A; 143B; 243A; 243B ; 443A ; 443B) adjacente à la première enceinte, chaque cavité intercalaire étant destinée à recevoir ledit second fluide, et étant munie d'un dispositif d'ajustement de la pression en son sein (160A ; 160B ; 260A ; 260B ; 460A ; 460B), où le second fluide présente un indice optique sensiblement égal à celui de l'un parmi le fluide fonctionnel (120 ; 320 ; 420) et un milieu environnant (150 ; 450) entourant ledit élément, à plus ou moins 10% près, et où chacun desdits dispositifs d'ajustement de la pression (160A; 160B; 260A; 260B ; 460A; 460B) est adapté pour que la pression au sein de la cavité intercalaire correspondante (143A; 143B; 443A; 443B) soit sensiblement égale à la pression de l'autre parmi le fluide fonctionnel (120 ; 320 ; 420) dans la première enceinte et le milieu environnant (150 ; 450), à plus ou moins 10% près.

10. Elément (500) selon l'une quelconque des revendications 1 à 8, **caractérisé en ce qu'**il comprend une série d'enceintes (510₁, 510₂, 510₃) juxtaposées, destinées à recevoir en circulation des fluides fonctionnels (520₁, 520₂, 520₃) de même nature, et **en ce que** :
- l'une au moins des enceintes d'extrémité (510₁; 510₃) de ladite série est munie d'une fenêtre d'entrée et/ou sortie (540A; 540B) et est nommée alors première enceinte, avec ladite fenêtre d'entrée et/ou sortie (540A ; 540B) située sur ladite première enceinte et apte à laisser passer un faisceau lumineux dans et/ou hors de ladite première enceinte, et ladite fenêtre d'entrée et/ou sortie comportant deux hublots respectifs (542A, 541A ; 542B, 541B) qui délimitent latéralement une cavité intercalaire respective (543A ; 543B) adjacente à ladite première enceinte, ladite cavité intercalaire étant destinée à recevoir ledit second fluide, et étant munie d'un dispositif d'ajustement de la pression en son sein (560), où le second fluide présente un indice optique sensiblement égal à celui de l'un parmi le fluide fonctionnel (520₁, 520₂, 520₃) et un milieu environnant (550) entourant ledit élément, à plus ou moins 10% près, et où ledit dispositif d'ajustement de la pression (560) est adapté pour que la pression au sein de la cavité intercalaire (543A ; 543B) soit sensiblement égale à la pression de l'autre parmi le fluide fonctionnel (520₁, 520₂, 520₃) dans la première enceinte et le milieu environnant (550), à plus ou moins 10% près ;
- les enceintes (510₁, 510₂, 510₃) sont séparées deux à deux par deux hublots intercalaires (571) respectifs qui délimitent ensemble une région de séparation (572) entre deux enceintes voisines ; et
- chaque région de séparation (572) est destinée à recevoir un fluide de même nature et à une même pression que le second fluide dans la cavité intercalaire (543A ; 543B) de l'au moins une fenêtre d'entrée et/ou sortie (540A ; 540B).

11. Elément (500) selon la revendication 10, **caractérisé en ce que** l'au moins une région de séparation (572), d'une part, et la cavité intercalaire (543A ; 543B) de l'au moins une enceinte d'extrémité formant une première enceinte, d'autre part, forment ensemble un même logement (573) présentant une pression uniforme dans l'espace.

12. Elément (100; 100'; 100 ; 200; 400; 500) selon l'une quelconque des revendications 1 à 11, **caractérisé en ce que** le fluide fonctionnel (120 ; 420 ; 520₁ ; 520₂ ; 520₂ ; 520₃) est un fluide réfrigérant pour un milieu amplificateur solide.

13. Elément (300) selon l'une quelconque des revendications 1 à 11, **caractérisé en ce que** le fluide fonctionnel (320) constitue un milieu amplificateur.

14. Système d'amplification laser (6000), comportant un élément (100; 100'; 100" ; 200 ; 300 ; 400 ; 500) selon l'une quelconque des revendications 1 à 13, et au moins une source d'émission lumineuse (63) adaptée à émettre un faisceau lumineux (631) de pompage optique, en direction de la première enceinte (110; 110' ; 210; 310 ; 410 ; 510₁ ; 510₃).

## Patentansprüche

1. Element (100; 100'; 100"; 200; 300; 400; 500) eines optischen Systems, enthaltend:
- eine erste Kammer (110; 110'; 210; 310; 410; 510₁; 510₃), die dazu bestimmt ist, ein erstes Fluid (120; 320; 420; 520₁; 520₂; 520₃), Betriebsfluid genannt, in Strömung aufzunehmen; und
- zumindest ein Einlass- und/oder Auslassfenster (140A; 140A'; 140B; 440A; 440B; 540A; 540B), das sich an der ersten Kammer befindet und dazu geeignet ist, einen Lichtstrahl (131; 131'; 131"; 431; 531) in die erste Kammer hinein und/oder aus dieser heraus passieren zu lassen;
wobei das Einlass- und/oder Auslassfenster (140A; 140A'; 140B; 440A; 440B; 540A; 540B) zwei Luken (142A; 141A; 142B; 142A"; 141A"; 142B"; 141B"; 442A, 441A; 442B, 441B; 542A, 541A; 542B, 541B) enthält, die seitlich einen Hohlraum, Zwischenhohlraum (143A; 143B; 243A; 243B; 443A; 443B; 543A; 543B) genannt, begrenzen, der an die erste Kammer angrenzt, und
wobei der Zwischenhohlraum dazu bestimmt ist, ein zweites Fluid mit einem vorbestimmten optischen Index aufzunehmen, und mit einer Vorrichtung (160A; 160B; 260A; 260B; 460A; 460B; 560) zur Einstellung des Drucks darin versehen ist,
**dadurch gekennzeichnet, dass**:
- das zweite Fluid einen optischen Index aufweist, der im Wesentlichen gleich demjenigen von einem aus Betriebsfluid (120; 320; 420; 520₁; 520₂; 520₃) und das Element umgebendem Umgebungsmedium (150; 450; 550) ist, auf plus oder minus 10 % genau; und
- die Druckeinstellvorrichtung (160A; 160B; 260A; 260B; 460A; 460B; 560) so ausgelegt ist, dass der Druck innerhalb des Zwischenhohlraums (143A; 143B; 443A; 443B; 543A; 543B) im Wesentlichen gleich dem Druck des anderen aus Betriebsfluid (120; 320; 420; 520₁; 520₂; 520₃) in der ersten Kammer und Umgebungsmedium (150; 450; 550) ist, auf plus oder minus 10 % genau.

2. Element (100; 100'; 100"; 200; 300; 400; 500) nach Anspruch 1,
**dadurch gekennzeichnet, dass** eine durchschnittliche Dicke der Luke (141A; 141B; 141A"; 141B"; 441A; 441B; 541A; 541B), die sich auf der Seite der ersten Kammer befindet, geringer ist als eine durchschnittliche Dicke der Luke (142A; 142B; 142A"; 142B"; 442A; 442B; 542A; 542B), die sich auf der der ersten Kammer gegenüberliegenden Seite befindet.

3. Element (100; 100'; 100"; 200; 300; 500) nach Anspruch 1 oder 2,
**dadurch gekennzeichnet, dass**:
- das zweite Fluid einen optischen Index aufweist, der im Wesentlichen gleich demjenigen des Umgebungsmediums (150; 550) ist, auf plus oder minus 10 % genau; und
- die Druckeinstellvorrichtung (160A; 160B; 260A; 260B; 560) so ausgelegt ist, dass der Druck innerhalb des Zwischenhohlraumes (143A; 143B; 243A; 243B; 543A; 543B) im Wesentlichen gleich dem Druck des Betriebsfluids (120; 320; 520₁; 520₂; 520₃) in der ersten Kammer ist, auf plus oder minus 10% genau.

4. Element (100; 100'; 100"; 300; 500) nach Anspruch 3,
**dadurch gekennzeichnet, dass** der Zwischenhohlraum (143A; 143B; 543A; 543B) und die erste Kammer (110; 110'; 310; 510₁; 510₃) durch eine Leitung (161A; 161B; 561) miteinander verbunden sind, die durch eine verformbare oder verschiebbare Membran (162A; 162B) verschlossen ist, wobei die Membran (162A; 162B) dazu geeignet ist, sich als Reaktion auf eine Differenz zwischen dem Druck im Zwischenhohlraum (143A; 143B; 543A; 543B) und dem Druck in der ersten Kammer (110; 100'; 310; 510₁; 510₃) zu verformen oder in Richtung des Zwischenhohlraums oder der ersten Kammer zu verschieben, wobei die Leitung und die Membran somit die Druckeinstellvorrichtung (160A; 160B) bilden.

5. Element (200) nach Anspruch 3,
**dadurch gekennzeichnet, dass** die Druckeinstellvorrichtung (260A; 260B) enthält:
- einen ersten Drucksensor (263A; 263B), der sich in der ersten Kammer (210) befindet;
- einen zweiten Drucksensor (264A; 264B), der sich in dem Zwischenhohlraum befindet; und
- eine Steuervorrichtung (265A, 266A; 265B, 266B), die am Eingang Druckmessungen empfängt, die von dem ersten und dem zweiten Drucksensor geliefert werden, und dazu ausgelegt ist, den Druck in dem Zwischenhohlraum (243A; 243B) so zu steuern, dass er im Wesentlichen gleich dem Druck in der ersten Kammer (210) ist.

6. Element (400) nach Anspruch 1 oder 2,
**dadurch gekennzeichnet, dass**:
- das zweite Fluid einen optischen Index aufweist, der im Wesentlichen gleich demjenigen des Betriebsfluids (420) ist, auf plus oder minus 10 % genau; und
- die Druckeinstellvorrichtung (460A; 460B) so ausgelegt ist, dass der Druck innerhalb des Zwischenhohlraums (443A; 443B) im Wesentlichen gleich dem Druck in dem Umgebungsmedium (450) ist, auf plus oder minus 10% genau.

7. Element (400) nach Anspruch 6,
**dadurch gekennzeichnet, dass** das zweite Fluid von gleicher Art wie das Betriebsfluid (420) ist.

8. Element (400) nach Anspruch 6 oder 7,
**dadurch gekennzeichnet, dass** der Zwischenhohlraum (443A; 443B) zu einer Säule (467A; 467B) hin offen ist, die dazu geeignet ist, eine variable Menge des zweiten Fluids aufzunehmen, und die selbst zum Umgebungsmedium (450) hin offen ist, wobei die Säule somit die Druckeinstellvorrichtung (460A; 460B) bildet.

9. Element (100; 100"; 200; 300; 400) nach einem der Ansprüche 1 bis 8,
**dadurch gekennzeichnet, dass** die erste Kammer (110; 210; 310; 410) seitlich von zwei Einlass- und/oder Auslassfenstern (140A; 140B; 440A; 440B) eingefasst ist, wobei jedes dieser beiden Einlass- und/oder Auslassfenster an der ersten Kammer angeordnet und dazu geeignet ist, einen Lichtstrahl in die erste Kammer hinein und/oder aus dieser heraus passieren zu lassen, und wobei jedes dieser beiden Einlass- und/oder Auslassfenster zwei jeweilige Luken (142A, 141A; 142B, 141B; 142A", 141A"; 142B", 141B"; 442A, 441A; 442B, 441B) umfasst, die seitlich einen jeweiligen Zwischenhohlraum (143A; 143B; 243A; 243B; 443A; 443B) begrenzen, der an die erste Kammer angrenzt, wobei jeder Zwischenhohlraum zur Aufnahme des zweiten Fluids bestimmt ist und mit einer Vorrichtung (160A; 160B; 260A; 260B; 460A; 460B) zur Einstellung des Drucks darin versehen ist, wobei das zweite Fluid einen optischen Index aufweist, der im Wesentlichen gleich demjenigen von einem aus Betriebsfluid (120; 320; 420) und das Element umgebendem Umgebungsmedium (150; 450) ist, auf plus oder minus 10% genau, und wobei jede der Druckeinstellvorrichtungen (160A; 160B; 260A; 260B; 460A; 460B) so ausgelegt ist, dass der Druck innerhalb des entsprechenden Zwischenhohlraumes (143A; 143B; 443A; 443B) im Wesentlichen gleich dem Druck des anderen aus Betriebsfluid (120; 320; 420) in der ersten Kammer und Umgebungsmedium (150; 450) ist, auf plus oder minus 10% genau.

10. Element (500) nach einem der Ansprüche 1 bis 8,
**dadurch gekennzeichnet, dass** es eine Reihe von nebeneinander liegenden Kammern (510₁, 510₂, 510₃) enthält, die dazu bestimmt sind, Betriebsfluide (520₁, 520₂, 520₃) gleicher Art in Strömung aufzunehmen, und dass:
- zumindest eine der endseitigen Kammer (510₁; 510₃) der Reihe mit einem Einlass- und/oder Auslassfenster (540A; 540B) versehen ist und dann als erste Kammer bezeichnet ist, wobei sich das Einlass- und/oder Auslassfenster (540A; 540B) an der ersten Kammer befindet und dazu geeignet ist, einen Lichtstrahl in die Kammer hinein und/oder aus dieser heraus passieren zu lassen, und wobei das Einlass- und/oder Auslassfenster zwei jeweilige Luken (542A, 541A; 542B, 541B) umfasst, die seitlich einen jeweiligen Zwischenhohlraum (543A; 543B) angrenzend an die erste Kammer begrenzen, wobei der Zwischenhohlraum zur Aufnahme des zweiten Fluids bestimmt ist und mit einer Vorrichtung (560) zur Einstellung des Drucks darin versehen ist, wobei das zweite Fluid einen optischen Index aufweist, der im Wesentlichen gleich demjenigen von einem aus Betriebsfluid (520₁, 520₂, 520₃) und das Element umgebendem Umgebungsmedium (550) ist, auf plus oder minus 10% genau, und wobei die Druckeinstellvorrichtung (560) so ausgelegt ist, dass der Druck innerhalb des Zwischenhohlraums (543A; 543B) im Wesentlichen gleich dem Druck des anderen aus Betriebsfluid (520₁, 520₂, 520₃) in der ersten Kammer und Umgebungsmedium (550) ist, auf plus oder minus 10% genau;
- die Kammern (510₁, 510₂, 510₃) paarweise durch zwei jeweilige zwischengeordnete Luken (571) getrennt sind, die zusammen einen Trennbereich (572) zwischen zwei benachbarten Kammern begrenzen; und
- jeder Trennbereich (572) dazu bestimmt ist, ein Fluid gleicher Art und mit demselben Druck wie das zweite Fluid in dem Zwischenhohlraum (543A; 543B) des zumindest einen Einlass- und/oder Auslassfensters (540A; 540B) aufzunehmen.

11. Element (500) nach Anspruch 10,
**dadurch gekennzeichnet, dass** der zumindest eine Trennbereich (572) einerseits und der Zwischenhohlraum (543A; 543B) der zumindest einen eine erste Kammer bildenden endseitigen Kammer andererseits zusammen ein und dieselbe Aufnahme (573) mit einem räumlich gleichmäßigen Druck bilden.

12. Element (100; 100'; 100"; 200; 400; 500) nach einem der Ansprüche 1 bis 11,
**dadurch gekennzeichnet, dass** das Betriebsfluid (120; 420; 520₁; 520₂; 520₂; 520₃) ein Kühlfluid für ein festes Verstärkungsmedium ist.

13. Element (300) nach einem der Ansprüche 1 bis 11,
**dadurch gekennzeichnet, dass** das Betriebsfluid (320) ein Verstärkungsmedium darstellt.

14. Laserverstärkungssystem (6000) mit einem Element (100; 100'; 100"; 200; 300; 400; 500) nach einem der Ansprüche 1 bis 13 und zumindest einer Lichtemissionsquelle (63), die dazu ausgelegt ist, einen optischen Pumplichtstrahl (631) in Richtung der ersten Kammer (110; 110'; 210; 310; 410; 510₁; 510₃) zu emittieren.

## Claims

1. An element (100; 100'; 100"; 200; 300; 400; 500) of an optical system including:
- a first enclosure (110; 110'; 210; 310; 410; 510₁; 510₃), for receiving in circulation a first fluid (120; 320; 420; 520₁; 520₂; 520₃), called a functional fluid; and
- at least one inlet and/or outlet window (140A; 140A'; 140B; 440A; 440B; 540A; 540B), located on the first enclosure, and capable of allowing a light beam (131; 131'; 131"; 431; 531) to pass into and/or out of the first enclosure;
wherein the inlet and/or outlet window (140A; 140A'; 140B; 440A; 440B; 540A; 540B) includes two viewports (142A, 141A; 142B, 141B; 142A", 141A"; 142B", 141B"; 442A, 441A; 442B, 441B; 542A, 541A; 542B, 541B) which laterally delimit a so-called spacer cavity (143A; 143B; 243A; 243B; 443A; 443B; 543A; 543B), adjacent to the first enclosure, and in that said spacer cavity is for receiving a second fluid, having a predetermined optical index, and is provided with a pressure adjusting device (160A; 160B; 260A; 260B; 460A; 460B; 560) therewithin,
**characterised in that**:
- the second fluid has an optical index substantially equal to that of one among the functional fluid (120; 320; 420; 520₁; 520₂; 520₃) and a ambient medium (150; 450; 550) surrounding said element, within plus or minus 10%; and
- the pressure adjusting device (160A; 160B; 260A; 260B; 460A; 460B; 560) is adapted for the pressure within the spacer cavity (143A; 143B; 443A; 443B; 543A; 543B) to be substantially equal to the pressure of the other among the functional fluid (120; 320; 420; 520₁; 520₂; 520₃) in the first enclosure and the ambient medium (150; 450; 550), within plus or minus 10%.

2. The element (100; 100'; 100"; 200; 300; 400; 500) according to claim 1, **characterised in that** a mean thickness of the viewport (141A; 141B; 141A"; 141B"; 441A; 441B; 541A; 541B) located on the side of the first enclosure is smaller than a mean thickness of the viewport (142A; 142B; 142A"; 142B"; 442A; 442B; 542A; 542B) located on the side opposite to the first enclosure.

3. The element (100; 100'; 100"; 200; 300; 500) according to claim 1 or 2, **characterised in that**:
- the second fluid has an optical index substantially equal to that of the ambient medium (150; 550), within plus or minus 10%; and
- the pressure adjusting device (160A; 160B; 260A; 260B; 560) is adapted for the pressure within the spacer cavity (143A; 143B; 243A; 243B; 543A; 543B) to be substantially equal to the pressure of the functional fluid (120; 320; 520₁; 520₂; 520₃) in the first enclosure, within plus or minus 10%.

4. The element (100; 100'; 100"; 300; 500) according to claim 3, **characterised in that** the spacer cavity (143A; 143B; 543A; 543B) and the first enclosure (110; 110'; 310; 510₁; 510₃) are connected together by a conduit (161A; 161B; 561) closed by a deformable or movable membrane (162A; 162B), the membrane (162A; 162B) being capable of deforming or moving towards the spacer cavity or the first enclosure in response to a difference between the pressure in the spacer cavity (143A; 143B; 543A; 543B) and the pressure in the first enclosure (110; 100'; 310; 510₁; 510₃), the conduit and said membrane thus forming the pressure adjusting device (160A; 160B).

5. The element (200) according to claim 3, **characterised in that** the pressure adjusting device (260A; 260B) includes:
- a first pressure sensor (263A; 263B), located in the first enclosure (210);
- a second pressure sensor (264A; 264B), located in the spacer cavity; and
- a control device (265A, 266A; 265B, 266B), receiving as inputs pressure measurements provided by the first and second pressure sensors, and configured to drive pressure in the spacer cavity (243A; 243B) such that it is substantially equal to the pressure in the first enclosure (210).

6. The element (400) according to claim 1 or 2, **characterised in that**:
- the second fluid has an optical index substantially equal to that of the functional fluid (420), within plus or minus 10%; and
- the pressure adjusting device (460A; 460B) is adapted for the pressure within the spacer cavity (443A; 443B) to be substantially equal to the pressure in the ambient medium (450), within plus or minus 10%.

7. The element (400) according to claim 6, **characterised in that** the second fluid is of the same nature as the functional fluid (420).

8. The element (400) according to claim 6 or 7, **characterised in that** the spacer cavity (443A; 443B) is open onto a column (467A; 467B) adapted to receive a variable amount of the second fluid, and itself open onto the ambient medium (450), said column thus forming the pressure adjusting device (460A; 460B).

9. The element (100; 100"; 200; 300; 400) according to any of claims 1 to 8, **characterised in that** the first enclosure (110; 210; 310; 410) is laterally bordered by two inlet and/or outlet windows (140A; 140B; 440A; 440B), each of these two inlet and/or outlet windows being located on the first enclosure and capable of allowing a light beam to pass into and/or out of the first enclosure, and each of these two inlet and/or outlet windows including two respective viewports (142A, 141A; 142B, 141B; 142A", 141A"; 142B", 141B"; 442A, 441A; 442B, 441B) which laterally delimit a respective spacer cavity (143A; 143B; 243A; 243B; 443A; 443B) adjacent to the first enclosure, each spacer cavity being for receiving said second fluid, and being provided with a pressure adjusting device (160A; 160B; 260A; 260B; 460A; 460B) therewithin, wherein the second fluid has an optical index substantially equal to that of one among the functional fluid (120; 320; 420) and a ambient medium (150; 450) surrounding said element, within plus or minus 10%, and wherein each of said pressure adjusting devices (160A; 160B; 260A; 260B; 460A; 460B) is adapted for the pressure within the corresponding spacer cavity (143A; 143B; 443A; 443B) to be substantially equal to the pressure of the other among the functional fluid (120; 320; 420) in the first enclosure and the ambient medium (150; 450), within plus or minus 10%.

10. The element (500) according to any of claims 1 to 8, **characterised in that** it comprises a series of juxtaposed enclosures (510₁, 510₂, 510₃), for receiving in circulation functional fluids (520₁, 520₂, 520₃) of the same nature, and **in that**:
- at least one of the end enclosures (510_{1;} 510₃) of said series is provided with an inlet and/or outlet window (540A; 540B) and is thereby called a first enclosure, with said inlet and/or outlet window (540A; 540B) located on said first enclosure and capable of allowing a light beam to pass into and/or out of said first enclosure, and said inlet and/or outlet window including two respective viewports (542A, 541A; 542B, 541B) which laterally delimit a respective spacer cavity (543A; 543B) adjacent to said first enclosure, said spacer cavity being for receiving said second fluid, and being provided with a pressure adjusting device (560) therewithin, wherein the second fluid has an optical index substantially equal to that of one among the functional fluid (520₁, 520₂, 520₃) and a ambient medium (550) surrounding said element, within plus or minus 10%, and wherein said pressure adjusting device (560) is adapted for the pressure within the spacer cavity (543A; 543B) to be substantially equal to the pressure of the other among the functional fluid (520₁, 520₂, 520₃) in the first enclosure and the ambient medium (550), within plus or minus 10%;
- the enclosures (510₁, 510₂, 510₃) are separated two by two by two respective spacer viewports (571) which delimit together a separating region (572) between two neighbouring enclosures; and
- each separating region (572) is for receiving a fluid of the same nature and at a same pressure as the second fluid in the spacer cavity (543A; 543B) of the at least one inlet and/or outlet window (540A; 540B).

11. The element (500) according to claim 10, **characterised in that** the at least one separating region (572), on the one hand, and the spacer cavity (543A; 543B) of the at least one end enclosure forming a first enclosure, on the other hand, form together a same housing (573) having a pressure which is uniform in space.

12. The element (100; 100'; 100"; 200; 400; 500) according to any of claims 1 to 11, **characterised in that** the functional fluid (120; 420; 520_{1;} 520₂; 520₂; 520₃) is a refrigerant for a solid amplifying medium.

13. The element (300) according to any of claims 1 to 11, **characterised in that** the functional fluid (320) makes up an amplifying medium.

14. A laser amplification system (6000), including an element (100; 100'; 100"; 200; 300; 400; 500) according to any of claims 1 to 13, and at least one light emitting source (63) adapted to emit an optical pumping light beam (631), towards the first enclosure (110; 110'; 210; 310; 410; 510₁; 510₃).
